Europäisches Patentamt

European Patent Office

Office européen des brevets

(19)

(11) EP 0 634 864 B1

(12) FASCICULE DE BREVET EUROPEEN

(45) Date de publication et mention
de la délivrance du brevet:
**28.04.1999 Bulletin 1999/17**

(51) Int Cl.⁶: **H04N 5/232**, H04N 5/225,
H04N 5/335, H04N 3/15

(21) Numéro de dépôt: **94401495.0**

(22) Date de dépôt: **30.06.1994**

(54) **Procédé pour la réalisation d'images, à l'aide d'un capteur à transfert de charge et agencement pour la mise en oeuvre de ce procédé**

Verfahren zur Erzeugung von Bildern mit einem ladungsgekoppelten Bildsensor und Vorrichtung zur Durchführung des Verfahrens

Method for generating images by means of a CCD sensor and device for carrying out this method

(84) Etats contractants désignés:
**DE FR GB IT SE**

(30) Priorité: **13.07.1993 FR 9308619**

(43) Date de publication de la demande:
**18.01.1995 Bulletin 1995/03**

(73) Titulaire: **Augais, Thierry**
**F-91190 Gif Sur Yvette (FR)**

(72) Inventeur: **Augais, Thierry**
**F-91190 Gif Sur Yvette (FR)**

(74) Mandataire: **Berger, Helmut et al**
**Cabinet WEINSTEIN**
**20, avenue de Friedland**
**75008 Paris (FR)**

(56) Documents cités:
**DE-A- 3 736 688**

- **PATENT ABSTRACTS OF JAPAN vol. 7, no. 13 (E-153) 19 Janvier 1983 & JP-A-57 170 674 (FUJI SHASHIN FILM KK) 20 Octobre 1982**
- **PATENT ABSTRACTS OF JAPAN vol. 17, no. 351 (E-1392) 2 Juillet 1993 & JP-A-05 048 950 (SONY CORP.) 26 Février 1993**

## Description

L'invention concerne un procédé pour la réalisation d'images, à partir d'un rayonnement contenant les informations d'image, ainsi qu'un agencement pour la mise en oeuvre de ce procédé, selon les préambules des revendications 1 et 7.

Des procédés et agencements de ce type, qui utilisent des dispositifs à transfert de charge (DTC ou charge coupled device CCD en anglais) sont déjà connus. Leur domaine d'application est très vaste et de nombreuses variantes de ces composants sont disponibles actuellement. Un exemple est donné dans le document JP-A-5048950.

L'invention concerne essentiellement les capteurs dits scientifiques généralement utilisés lorsqu'une grande définition et une grande qualité d'image sont nécessaires. Dans ce domaine d'applications, la mise en oeuvre de DTC à transfert de trame est courante et bien connue.

Les phases de fonctionnement du DTC sont les suivantes

- la phase d'effacement, nécessaire pour évacuer les charges accumulées depuis la dernière lecture,

- la phase d'intégration, pendant laquelle les photons incidents sur la surface du DTC sont convertis avec un certain rendement en électrons, eux-mêmes stockés dans les puits de potentiel ou pixels du DTC sous forme de paquets,

- la phase de lecture, pendant laquelle chaque paquet d'électrons est converti en une tension proportionnelle au nombre d'électrons du paquet, laquelle tension est appliquée en entrée d'un dispositif de traitement du signal dont le rôle est de générer une information exploitable généralement sous forme de signal vidéo ou d'échantillons numériques stockés dans une mémoire.

Dans le cas où l'application nécessite un fonctionnement en continu du capteur, la phase d'intégration et la phase de lecture se suivent à un rythme suffisant pour obtenir le débit d'images souhaité. La phase d'effacement est alors inutile car elle est assurée par la phase de lecture, qui a lieu juste avant la phase d'intégration.

L'invention concerne la mise en oeuvre d'un capteur en mode monocoup, c'est-à-dire caractérisé par un cycle de fonctionnement comportant les 3 phases précédemment décrites, chaque cycle de fonctionnement étant séparé du suivant d'une durée variable selon l'application.

La mise en oeuvre de ces trois phases de fonctionnement nécessite une électronique sophistiquée et le dispositif de traitement du signal et de stockage est lui-même complexe : le dispositif global comporte donc, en dehors du DTC lui-même qui constitue le composant actif essentiel, un ensemble important de composants électroniques.

Lorsque l'application nécessite que l'ensemble capteur soit d'un volume très réduit, la solution est alors onéreuse car nécessitant un degré de miniaturisation élevé. Dans certains cas, la solution est même irréalisable, la technologie ne permettant pas d'atteindre le volume souhaité pour l'application.

On peut citer à titre d'exemples non limitatifs les appareils photo numériques, dont certains modèles comportent une électronique d'une très grande complexité.

Une alternative au problème de la taille du capteur est de déporter une partie de l'électronique de commande du dispositif à transfert de charges et de traitement du signal vidéo. Dans ce cas, le capteur est relié à cette électronique par un câble comportant suffisamment de conducteurs pour assurer les différentes liaisons électriques. Les inconvénients d'un tel câble sont évidents : longueur et donc rayon d'action réduit, fragilité, difficulté de mise en oeuvre et limitation des performances au-delà d'une certaine longueur de câble. On peut citer à titre d'exemple les capteurs intra oraux utilisés en radiologie dentaire, les têtes à DTC utilisées en astronomie.

La présente invention a pour but de proposer un procédé et un agencement pour la mise en oeuvre de celui-ci, qui pallie les inconvénients de l'état de la technique.

Pour atteindre ce but, le procédé comporte les caractéristiques énoncées dans la revendication 1 dans la partie caractérisante.

L'agencement pour la mise en oeuvre du procédé est caractérisé par les caractéristiques de la revendication 7.

D'autres caractéristiques de l'invention sont décrites dans les revendications dépendantes 1 à 6 et 8 à 15.

L'invention sera mieux comprise et d'autres buts, caractéristiques, détails et avantages de celle-ci apparaîtront plus clairement au cours de la description explicative qui va suivre faite en référence à la figure unique annexée montrant sous forme d'un schéma bloc, la structure d'un capteur de l'agencement selon l'invention, déconnectable des moyens électroniques de commande et de traitement de l'agencement.

Sur la figure, seulement le capteur est représenté. Il est réalisé sous forme d'un module déconnectable des moyens électroniques de commande et de traitement, de façon à pouvoir fonctionner de façon autonome à l'état déconnecté, en mode d'intégration, c'est-à-dire pendant la phase d'acquisition des images. Les moyens électroniques de commande et de traitement ne sont pas décrits particulièrement, car ils sont connus en soi.

L'objet de l'invention est de proposer une nouvelle solution pour l'exploitation d'un DTC à transfert de trame en mode de monocoup.

Cette solution consiste aussi en un capteur autonome, c'est-à-dire sans liaison filaire, comportant une électronique extrêmement réduite, et connecté à l'ensemble électronique de commande et de traitement lors de la phase d'effacement et lors de la phase de lecture.

Ainsi, cette solution permet de ne pas avoir à intégrer dans le boîtier capteur l'électronique de commande du mode de lecture et du mode d'effacement, ainsi que l'électronique de traitement du signal vidéo.

Selon l'invention, le capteur à DTC est positionné en mode intégration dès sa déconnexion physique de l'électronique de commande et de traitement. Il reste dans ce mode jusqu'à ce qu'il soit connecté à nouveau à l'électronique de commande et de traitement, où il est alors lu.

Durant la phase d'intégration selon l'invention, le DTC est exposé au rayonnement utile pendant une durée plus ou moins longue qui dépend de l'application et désignée ici par le terme de phase d'intégration utile. La phase d'intégration utile commence après la phase d'intégration du DTC. La phase d'intégration du DTC englobe donc la phase pendant laquelle le rayonnement utile incident a lieu sur la surface du DTC. On qualifiera donc dans le suite cette phase d'intégration, d'intégration globale.

On précise que la solution s'applique quelque soit la nature du rayonnement utile dès lors qu'il est exploitable par le DTC : à titre d'exemple, le rayonnement peut être un rayonnement visible ou infrarouge, auquel cas le capteur est monté dans un boîtier hermétique à la lumière comme un boîtier d'appareil photographique, la pose utile étant contrôlée par exemple par un obturateur mécanique. Le rayonnement utile peut être un rayonnement X, auquel cas le boîtier du capteur est hermétique à la lumière visible et non aux X, au moins pour la partie située en avant du plan focal du DTC ; aucun obturateur mécanique n'est alors nécessaire. Le rayonnement peut également être un rayonnement visible obtenu par l'excitation d'un écran scintillateur par un rayonnement X, comme c'est le cas dans certaines réalisations radiologiques ; dans ce cas, le boîtier est hermétique à la lumière et ne nécessite pas d'obturateur mécanique. Le boîtier contient le scintillateur positionné parallèlement à la surface du DTC, contre la surface sensible du DTC, ou bien couplé par fibres optiques, ou même couplé par une optique traditionnelle à lentilles. Le capteur à DTC selon l'invention se comporte comme un film photographique ou radiologique. Alors que le film ne peut être utilisé qu'une seule fois, le capteur à DTC selon l'invention est utilisable un très grand nombre de fois, pendant toute la durée de vie du capteur ; en outre, il bénéficie des avantages des DTC par rapport au film : sensibilité, linéarité, dynamique, contraste. Alors que le film nécessite une phase de développement chimique après exposition, le capteur selon l'invention est connecté à une électronique de commande et de traitement assurant au moins les fonctions de lecture du DTC, de traitement et de stockage éventuel du signal vidéo.

Le terme électronique de commande et de traitement est utilisé de manière générique pour désigner un coffret autonome ou connectable à un ordinateur par une ou des interfaces de communication standards ou spécifiques, une carte ou des cartes électroniques additionnelles montées dans un ordinateur personnel ou un bac à cartes. Un phénomène à prendre en considération et qui se pose lors de la mise en oeuvre d'un DTC est la génération d'électrons thermiques dans le substrat du DTC. Ce phénomène bien connu est dénommé courant d'obscurité (dark current dans la littérature anglo-saxonne). Son influence sur les performances du DTC se traduit de deux façons :

- D'abord le signal d'obscurité vient s'ajouter au signal utile obtenu pendant la phase d'intégration utile du DTC. La conséquence directe est une réduction de l'amplitude maximale du signal utile du DTC quand ce signal d'obscurité devient trop important.

Par exemple, si le courant d'obscurité atteint 50% de la tension de saturation $V_{sat}$ du DTC, l'amplitude crête du signal utile doit être deux fois plus faible que la tension de saturation $V_{sat}$.

- Ensuite, et c'est là le problème le plus important, le processus de génération du signal d'obscurité est aléatoire et poissonien : ainsi, pour une valeur $N_0$ du nombre d'électrons générés thermiquement dans chaque pixel, la valeur efficace du bruit correspondant est égale à $\sqrt{N_0}$ (racine carrée de $N_0$). Si K est le facteur de conversion de l'amplificateur de sortie du DTC, exprimé habituellement en microvolt par $e^-$ ($\mu V/e^-$), la valeur moyenne de la contribution du signal d'obscurité en sortie du DTC est égale à $KN_0$, et la valeur efficace du bruit en $\mu V$ est égale à $K\sqrt{N_0}$ (K fois racine carrée de $N_0$). Le signal moyen $KN_0$ peut être supprimé simplement par des méthodes bien connues qu'il n'est pas utile de préciser ici. Par contre, le bruit du signal d'obscurité $K\sqrt{N_0}$ ne peut être supprimé. Son effet est de réduire considérablement la dynamique globale du signal délivré par le DTC ; on entend par dynamique globale le rapport entre la tension de saturation du DTC et la valeur efficace de tous les bruits non déterministes dont est entaché le signal de sortie.

Généralement les conditions d'utilisation du DTC sont telles que le bruit thermique reste faible par rapport aux autres bruits. Pour ce faire, et pour un DTC donné, deux possibilités sont envisageables, séparément ou combinées :

- réduire le temps d'intégration du DTC, c'est-à-dire le temps pendant lequel les électrons thermiques vont s'accumuler. En effet, le nombre d'électrons produits par le courant d'obscurité dans chaque pixel du DTC pendant l'intégration est proportionnel au temps d'intégration.

- réduire le processus de génération de ces électrons thermiques en réduisant la température du DTC pendant l'intégration.

Dans le cas d'un capteur à DTC selon l'invention, le temps d'intégration globale est plus long que le temps d'intégration utile, et donc le bruit d'obscurité est plus élevé que dans le cas de l'utilisation normale du DTC.

La solution à ce problème, hormis la possibilité de refroidir le DTC, est de faire fonctionner le DTC en mode MPP.

Le mode MPP (Multi Pinned Phase en langue anglaise) peut être mis en oeuvre sur les DTC qui ont été conçus spécialement pour le supporter. Il consiste à polariser les phases du DTC sous une tension négative adéquate.

Dans ce mode, et pour les DTC conçus pour supporter ce mode de fonctionnement, le courant d'obscurité est bien inférieur à la valeur qu'il prend dans le mode non MPP. Le dispositif DTC pourrait par exemple être un dispositif commercialisé par la Société THOMPSOL sous la dénomination THX 7898M. Les DTC MPP sont apparus il y a quelques années et sont largement utilisés désormais. Le choix de cette technologie permet de mettre en oeuvre avantageusement le capteur à DTC selon l'invention. Toutes choses étant égales par ailleurs, en particulier le temps d'intégration utile, la température de fonctionnement et la valeur du rapport signal à bruit désiré, si on désigne par G le rapport de la valeur du courant d'obscurité en mode non MPP à celle du courant d'obscurité en mode MPP, la phase d'intégration du DTC peut durer G fois plus longtemps.

A titre d'exemple non limitatif, si un système nécessite une exposition de 1 seconde, c'est-à-dire une phase d'intégration utile du DTC de 1 seconde, et si la valeur de G est égale à 60 pour ce DTC, l'autonomie du capteur DTC selon la mise en oeuvre proposée par l'invention sera de 1 minute. Pour de nombreuses applications, une autonomie de 1 minute suffit pour déconnecter le capteur DTC de l'électronique de commande et de traitement, réaliser l'exposition à un endroit plus ou moins distant et reconnecter le capteur sur l'électronique de commande et de traitement.

Dans le cas où l'autonomie doit être prolongée, il est possible de refroidir le capteur à DTC. Diverses solutions sont envisageables : par exemple, le DTC peut être porté à une température suffisamment basse lorsqu'on le connecte sur l'électronique de commande et de traitement. Lorsqu'on le déconnecte, son refroidissement cesse et sa température remonte pendant la phase d'intégration, et ce à une vitesse qui dépend de l'inertie thermique du capteur. De cette manière, l'autonomie peut être augmentée considérablement : dans le cas de l'exemple précédent, si la température de fonctionnement sans refroidissement est de 25°C et que l'on effectue un refroidissement à 2°C, l'abaissement de température de 23°C au moment de la déconnexion du capteur de son électronique de commande et de traitement réduit le courant d'obscurité d'environ 8. On considère en effet que le courant d'obscurité est approximativement divisé par 2 chaque fois que l'on abaisse la température de 8°C.

Si l'on suppose qu'à la fin de la phase autonome la température du DTC est de 12°C et qu'elle a cru linéairement, la température moyenne est de 7°C : l'autonomie est alors multipliée par environ 4 ; elle est donc de 4 minutes.

Une autre solution est d'intégrer un dispositif de refroidissement dans le capteur. Un dispositif à effet PELTIER peut être utilisé avantageusement. Son alimentation électrique peut être soit interne, soit externe et portable, et connectée par deux conducteurs au capteur. Dans ce dernier cas, l'alimentation du DTC peut être obtenue à partir de l'alimentation des cellules à effet PELTIER de refroidissement.

Un autre solution encore est de coupler le DTC du capteur à un cryostat. Dans ces conditions, l'autonomie du capteur couplé au cryostat peut atteindre plusieurs heures : en effet, un cryostat permet de porter la température du DTC à environ -100°C, auquel cas le courant d'obscurité en intégration en mode MPP est quasiment nul.

Pour expliquer la mise en oeuvre du capteur à DTC selon l'invention, il n'est pas nécessaire de détailler la phase d'effacement et la phase de lecture ; celles-ci sont largement décrites dans la littérature spécialisée et elles restent valables pour la mise en oeuvre du capteur selon l'invention.

C'est pourquoi on se limite à la description de la mise en oeuvre du mode intégration.

Cette mise en oeuvre consiste à maintenir à un niveau de tension constant les phases de contrôle de la zone image du DTC ; cette polarisation est statique et ne nécessite pas de composants électroniques actifs. La tension à appliquer sur les phases est soit nulle, soit positive et égale pour les différentes phases à alimenter positivement dans le cas d'un DTC utilisé en mode non MPP, soit négative et égale pour les différentes phases de la zone image du DTC dans le cas d'un DTC utilisé en mode MPP.

A titre d'exemple, et sans que cela soit limitatif quant à la généralité de l'invention, on considèrera un DTC utilisé en intégration en mode MPP et fonctionnant en mode quadriphasé pour la zone image, conformément à la figure unique, sur laquelle le DTC porte la référence 1.

Dans ce cas, et pendant l'intégration globale, les phases $\Phi_{p1}$, $\Phi_{p2}$, $\Phi_{p3}$, $\Phi_{p4}$, de commande de la zone image du DTC sont portées à une tension négative constante $V_p$ de l'ordre de -10 à -12 V en fonction des caractéristiques du dispositif à transfert de charges.

Le courant consommé par les phases $\Phi_{p1}$, $\Phi_{p2}$, $\Phi_{p3}$, $\Phi_{p4}$ dans ce mode est très faible, typiquement quelques micro-ampères par phase, et la source de tension $V_p$ débite donc un courant de l'ordre de 10 μA. Elle peut être réalisée à partir d'un accumulateur 2, d'une pile ou bien de plusieurs de ces éléments montés en série ; cette source de tension peut être utilisée directement ou bien par l'intermédiaire d'un convertisseur continu-continu 3. Pour certaines applications, il est possible d'utiliser un simple condensateur chargé au préalable sous $V_p$ et capable d'assurer le maintien de cette tension à un niveau suffisant jusqu'à la fin de la phase d'intégration du DTC. Quelque soit la méthode retenue, le dispositif nécessaire à la génération d'une tension $V_p$ sous les quatres phases de la zone image du DTC est très simple et très économe en énergie électrique. Lorsque le capteur à DTC est connecté à l'électronique de commande et de traitement (non représenté), cette dernière réalise la lecture du DTC et son effacement : le dispositif doit donc permettre le pilotage des phases $\Phi_{p1}$, $\Phi_{p2}$, $\Phi_{p3}$, $\Phi_{p4}$ par l'ensemble électronique de commande et de traitement sans qu'il y ait de discontinuité de la tension appliquée sur ces phases lors de la connexion et de la déconnexion. Une méthode pour réaliser cette fonction est illustrée sur la figure unique.

Chaque phase de commande de la zone image du DTC 1 est reliée à la source de tension $V_p$ par une résistance :

$\Phi_{p1}$ est relié à $V_p$ par la résistance $R_1$,
$\Phi_{p2}$ est relié à $V_p$ par la résistance $R_2$,
$\Phi_{p3}$ est relié à $V_p$ par la résistance $R_3$,
$\Phi_{p4}$ est relié à $V_p$ par la résistance $R_4$.

Soit $I_{pn}$ le courant consommé par une des 4 phases $\Phi_{pn}$ (n variant de 1 à 4). Si les résistances $R_1$, $R_2$, $R_3$, $R_4$ ont une valeur de 10 kΩ, la chute de tension dans chacune des résistances est :

$$V_{Rn} = I_{pn}R_n$$

Pour $R_n$ = 10 kΩ, $I_{pn}$ = 2μA, on obtient :

$$V_{Rn} = 20\ mV$$

Cette valeur est suffisamment faible pour être négligée devant $V_p$ et n'a pas d'influence sur le fonctionnement du DTC.

La puissance dissipée dans chaque résistance $R_n$ vaut :

$$P_n = R_n I_{pn}^2 = 4 \times 10^{-8W}$$

Cette puissance est très faible.

La tension $V_p$ est obtenue à l'aide du convertisseur continu-continu 3, alimenté en entrée par l'accumulateur 2.

Lors de la connexion à l'électronique de commande et de traitement, l'accumulateur est rechargé par la connexion $J_5$.

Au moment de la connexion et de la déconnexion à l'électronique de commande et de traitement, les tensions appliquées par l'électronique de commande et de traitement sur les connexions $J_1$, $J_2$, $J_3$ et $J_4$ sont voisines de $V_p$ et assurent la continuité de la phase d'intégration globale.

Lors des phases d'effacement et de lecture du DTC, l'électronique de commande et de traitement pilote les tensions sur les phases $\Phi_{p1}$ à $\Phi_{p4}$ par les connexions $J_1$ à $J_4$, les résistances $R_1$ à $R_4$ de valeur suffisante assurant une indépendance entre la source $V_p$ et les tensions $V_{J1}$ à $V_{J4}$ appliquées en $J_1$ à $J_4$ par l'électronique de commande et de traitement.

Indépendamment des phases $\Phi_{p1}$ à $\Phi_{p4}$, la connexion du capteur sur le dispositif doit assurer la liaison électrique de divers autres signaux entre le capteur et l'électronique de commande et de traitement. Certaines précautions doivent être prises, en particulier pour protéger le capteur contre les décharges électrostatiques lors de la manipulation du capteur. Cependant, en dehors des phases $\Phi_{P1}$ à $\Phi_{p4}$, les autres signaux de commande et les autres alimentations du CCD sont dans un état passif pendant la phase d'intégration globale. On entend par signaux de commande passifs le fait qu'ils sont connectés à la masse par des composants passifs (résistances et/ou capacités). De plus, ces commandes et alimentations passives n'ont pas à être commutées lors de la connexion ou de la déconnexion du capteur et de l'électronique de commande et de traitement.

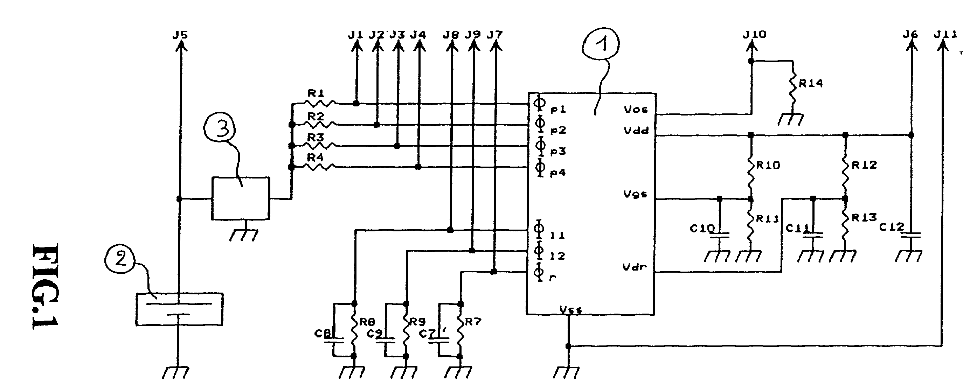

La figure 4 donne aussi un exemple de réalisation de l'électronique prévue à cette fin dans le capteur selon l'invention.

Les phases $\Phi_{11}$ et $\Phi_{12}$ de commande du registre à décalage horizontal, supposé biphasé dans cet exemple, sont pilotées par l'électronique de commande et de traitement par l'intermédiaire des contacts $J_8$ et $J_9$. Ces phases sont protégées contre les décharges électrostatiques par les résistances $R_8$ et $R_9$ et les condensateurs $C_8$ et $C_9$. Les valeurs de ces dernières résistances et condensateurs sont à optimiser en fonction du DTC et de la vitesse de lecture. De même, la phase $\Phi_R$ de commande du transistor de précharge est reliée au contact $J_7$ et est protégée par la résistance $R_7$ et le condensateur $C_7$. Les contacts $J_6$ et $J_{10}$ assurent l'alimentation $V_{DD}$ de l'amplificateur de sortie et l'accès à la sortie vidéo $V_{OS}$ du DTC. $V_{SS}$, la tension de référence de l'ensemble de l'électronique du capteur est reliée au contact $J_{11}$. Dans cet exemple de réalisation, la tension $V_{GS}$ appliquée à la grille de sortie du registre de lecture et de $V_{DR}$ le niveau de tension de précharge, sont générés à partir de la tension $V_{DD}$ et ne nécessitent pas de connexion vers l'électronique de commande et de traitement.

L'électronique d'un capteur selon l'invention est donc d'une très grande simplicité, et très économique. La consommation électrique du CCD pendant le fonctionnement en mode intégration est de plus extrêmement réduite.

Dans la réalisation donnée figure 4, on dénombre 11 contacts électriques entre le capteur à DTC et l'électronique de commande et de traitement : ces contacts peuvent être réalisés de différentes manières : utilisation d'un connecteur mâle et d'un connecteur femelle traditionnels sur l'un et l'autre des deux ensembles à connecter ; utilisation de contacts par pression mécanique sans insertion ; utilisation de contacts à force d'insertion nulle.

La solution selon l'invention présente donc de nombreux avantages :

- l'électronique à mettre en oeuvre dans le capteur étant très réduite, un degré élevé de miniaturisation du capteur peut être atteint.

- l'absence de câble de liaison entre le boîtier capteur et l'électronique de commande et de traitement permet une mobilité importante.

- dans le cas d'applications radiologiques, aucune mécanique n'étant nécessaire (obturateur), le boîtier peut être étanche et stérilisable en autoclave entre chaque utilisation.

- la consommation en énergie étant très réduite, un accumulateur de très faible dimension est suffisant ; un simple accumulateur cadmium-nickel couplé à un convertisseur continu-continu délivrant une tension de -10V suffit à maintenir le CCD en mode intégration.

Selon une variante de la mise en oeuvre du DTC selon l'invention, il est possible d'intégrer au capteur des fonctions électroniques ou partie de ces fonctions électroniques normalement préférentiellement situées dans l'ensemble électronique de commande et de traitement. L'importance et la fonctionnalité de cette électronique intégrée au capteur dépendent de l'application.

A titre d'exemple non limitatif, il peut être souhaitable d'ajouter au capteur un amplificateur de sortie du signal vidéo délivré par le DTC lors de la lecture du DTC. Cet amplificateur peut se limiter à un transistor ou un amplificateur opérationnel monté en suiveur et quelques résistances. Il résout les problèmes de protection de la sortie vidéo contre les courts-circuits lors de la manipulation du capteur.

Une autre variante très avantageuse pour certaines applications et pouvant être mise en oeuvre en plus ou indépendamment de la variante précédente est l'intégration d'une électronique permettant l'effacement du DTC. Selon cette variante, le cycle d'effacement commence dès la déconnexion du capteur de l'électronique de commande et de traitement et s'arrête soit par détection d'un rayonnement incident sur la surface photosensible du DTC par des moyens propres au capteur, tel qu'un dispositif à photodiodes, soit par détection d'une commande externe, soit par action manuelle, par exemple par pression sur un bouton poussoir prévu à cet effet sur le boîtier du capteur.

Dès que l'effacement prend fin par l'une des méthodes précédentes, le capteur passe en mode intégration jusqu'à ce qu'il soit connecté sur l'électronique de commande et de traitement pour lecture.

Pour que cet effacement soit simple à mettre en oeuvre, il est préférable que le DTC soit muni d'un drain d'évacuation des charges situé parallèlement au registre à décalage horizontal, de l'autre côté de la zone image. Dans le cas d'un DTC dont la zone image est commandée en quadriphasé, il suffit d'inverser le sens de décalage des lignes par rapport au mode lecture pour obtenir l'effacement uniquement en appliquant les tensions de commande adéquates sur les 4 phases de commande de la zone image du dispositif à transfert de charges. Afin de minimiser la consommation électrique résultant de ce mode de fonctionnement en effacement, il est souhaitable que les fronts de montée et de descente des tensions appliquées sur les phases de commande de la zone image soient les plus longs possibles, tout en conduisant à une durée suffisamment faible du cycle total d'effacement du DTC. Par exemple, pour obtenir un cycle d'effacement de 2 secondes d'un DTC comportant 500 lignes, la période du cycle de décalage d'une ligne est de 4ms. Pour une capacité d'entrée de chacune de ces phases de 20 nF, le courant moyen consommé est de 0,48 mA, pour une différence de 12V entre les tensions à l'état bas et les tensions à l'état haut appliquées sur les susdites phases.

Si les fronts de montée et de descente de ces tensions durent 10 µs et que ces fronts n'ont lieu que sur une phase en même temps, le courant crête instantané débité n'est que de 24mA.

De plus, les tensions des phases sont à l'état haut pendant environ 40 µs durant la période de 4 ms. Les phases étant en mode MPP pendant une fraction très importante de la période, environ 99%, ce cycle d'effacement conduit à un courant d'obscurité très réduit : on peut estimer sa valeur à 2 à 3 fois le courant d'obscurité que l'on obtiendrait en mode MPP pur. Cette méthode permet d'obtenir une autonomie du capteur, avant la phase d'intégration globale, limitée uniquement par l'autonomie de la source d'énergie électrique dont est équipé le capteur.

## Revendications

**1.** Procédé pour la réalisation d'images, à partir d'un rayonnement contenant les informations d'images, selon lequel on met en oeuvre un capteur (1) comportant un dispositif à transfert de charges organisé en transfert de trame et des moyens de commande et de traitement des données d'image stockées dans le dispositif à transfert de charges, caractérisé en ce que l'on pourvoit le capteur des moyens comportant des circuits électriques (2, 3) pour l'alimentation en énergie électrique et pour la mise en état d'intégration du dispositif à transfert de charges, lui permettant d'acquérir les images en mode d'intégration à l'état déconnecté des moyens de commande et de traitement, déconnecte le capteur des moyens de commande et de traitement pour l'acquisition d'une image, et reconnecte le capteur auxdits moyens de commande et de traitement pour la lecture, le traitement et l'exploitation des informations stockées dans le dispositif à transfert de charges au cours de la phase d'intégration.

2. Procédé selon la revendication 1, caractérisé en ce que l'on utilise comme dispositif à transfert de charges un dispositif à transfert de charges prévu pour fonctionner en mode appelé Multi Pinned Phase (MPP) et que la phase d'intégration a lieu dans ce mode MPP.

3. Procédé selon la revendication 1, caractérisé en ce que le dispositif à transfert de charges est porté, lorsqu'il est connecté à la susdite électronique de commande et de traitement, à une température inférieure à la température du milieu dans lequel la phase d'intégration a lieu.

4. Procédé selon la revendication 1, caractérisé en ce que le dispositif à transfert de charges est couplé à un dispositif de refroidissement qui maintient le dispositif à transfert de charges à une température inférieure à la température du milieu dans lequel l'intégration a lieu, pendant la phase d'intégration.

5. Procédé selon l'une des revendications précédentes, caractérisé en ce que l'on équipe le capteur d'une électronique contrôlant l'effacement du dispositif à transfert de charges, ladite électronique assurant le passage en mode intégration par détection d'une commande externe ou d'une action manuelle.

6. Procédé selon l'une des revendications précédentes, caractérisé en ce que les tensions de commande nécessaires au bon fonctionnement du capteur en mode intégration, lorsqu'il est déconnecté de ladite électronique de commande et de traitement sont générées à partir d'un accumulateur (2) intégré audit capteur, ledit accumulateur étant rechargé automatiquement lorsque ledit capteur est connecté à ladite électronique de commande et de traitement.

7. Agencement pour la mise en oeuvre du procédé selon l'une des revendications 1 à 6, du type comprenant un capteur pourvu d'un dispositif à transfert de charges organisé en transfert de trame et des moyens de commande et de traitement des données d'images stockées dans le dispositif à transfert de charges, ledit capteur étant déconnectable desdits moyens électroniques de commande et de traitement caractérisé en ce que le capteur est pourvu de moyens comportant des circuits électriques pour l'alimentation en énergie électrique et pour la mise en état d'intégration du dispositif à transfert de charges, lui permettant d'acquérir les images en mode d'intégration à l'état déconnecté des moyens de commande et de traitement, et constitue ainsi une unité d'acquisition d'images autonome, en mode d'intégration.

8. Agencement selon la revendication 7, caractérisé en ce qu'il comprend des moyens (R1 à R4) de maintien des phases de contrôle $\Phi_{p1}$ à $\Phi_{p4}$ de la zone d'image du dispositif à transfert de charges (1), à un niveau de tension sensiblement constant lors de la connexion et déconnexion du capteur.

9. Agencement selon la revendication 8, caractérisé en ce qu'il comprend une source de tension (2) reliée à chaque borne de phase de contrôle $\Phi_{p1}$ à $\Phi_{p4}$ de la zone d'image du dispositif à transfert de charges (1) par une résistance (R1 à R4) constituant le moyen précité de maintien à un niveau sensiblement constant.

10. Agencement selon la revendication 9, caractérisé en ce que la source de tension (2) est un accumulateur intégré au capteur et rechargeable automatiquement lorsque le capteur est connecté aux moyens de commande et de traitement précités.

11. Agencement selon l'une des revendications 7 à 10, caractérisé en ce que le capteur comporte un dispositif à transfert de charges (1) susceptible de fonctionner en mode appelé Multi Pinned Phase.

12. Agencement selon l'une des revendications 7 à 11, caractérisé en ce qu'il comprend des moyens de refroidissement du capteur à une température inférieure à la température du milieu dans laquelle la phase d'intégration a lieu.

13. Agencement selon la revendication 12, caractérisé en ce que les moyens de refroidissement du capteur sont de nature à assurer le refroidissement lorsque le capteur est connecté sur les moyens de commande et de traitement.

**14.** Agencement selon la revendication 12, caractérisé en ce que les moyens de refroidissement du capteur sont reliés à celui-ci.

**15.** Agencement selon l'une des revendications 7 à 14, caractérisé en ce que le capteur à dispositif à transfert de charges est monté dans un boîtier étanche stérilisable dans un autoclave.

**16.** Agencement selon l'une des revendications 7 à 15, caractérisé en ce que le capteur à dispositif à transfert de charges est monté dans un boîtier hermétique à la lumière visible et que le rayonnement est un rayonnement X.

**17.** Agencement selon l'une des revendications 7 à 16, caractérisé en ce que le capteur à dispositif à transfert de charges est hermétique à la lumière visible et qu'il comprend un scintillateur monté parallèlement à la surface photosensible dudit dispositif à transfert de charges, avec ou sans couplage optique par fibres ou par lentilles, et que le rayonnement utile est généré par ledit écran scintillateur lorsqu'il est excité par un rayonnement X.

**Patentansprüche**

**1.** Verfahren zur Erzeugung von Bildern von einer die Bildinformationen enthaltenden Strahlung ausgehend, bei dem man einen Sensor (1) mit einer zur Rasterübertragung organisierten ladungsgekoppelten Vorrichtung und Mitteln zur Steuerung und Verarbeitung der Bilddaten, die in der ladungsgekoppelten Vorrichtung gespeichert sind, verwendert wird, dadurch gekennzeichnet, daß man den Sensor mit Mitteln versieht, die elektrische Schaltungskreise zur Speisung mit elektrischer Energie und zur Versetzung der ladungsgekoppelten Vorrichtung in einen Integrationszustand besitzten, die es gestatten, die Bilder im Integrationsmodus in einem von den Steuer- und Verarbeitungsmittel abgeschalteten Zustand zu erwerben, man den Sensor von den Steuer- und Verarbeitungsmitteln zum Erwerb eines Bildes abschaltet und man den Sensor wieder an die Steuer- und Verarbeitungsmittel zum Lesen, zur Verarbeitung und zur Auswertung der Informationen anschließt, die in der ladungsgekoppelten Vorrichtung während der Integrationsphase gespeichert worden sind.

**2.** Verfahren nach Anspruch 1, dadurch gekennzeichnet, daß man als ladungsgekoppelte Vorrichtung eine ladungsgekoppelte Vorrichtung verwendet, die vorgesehen ist, um im sogenannten Multi Pinned Phase (MPP)-Modus zu arbeiten und daß die Integrationsphase während dieses MPP-Modus stattfindet.

**3.** Verfahren nach Anspruch 1, dadurch gekennzeichnet, daß die ladungsgekoppelte Vorrichtung auf eine Temperatur gebracht wird, die geringer ist als die Temperatur des Milieus, in dem die Integrationsphase stattfindet, wenn sie an die genannte Steuer- und Verarbeitungselektronik angeschlossen ist.

**4.** Verfahren nach Anspruch 1, dadurch gekennzeichnet, daß die ladungsgekoppelte Vorrichtung an eine Kühlvorrichtung angeschlossen wird, die die ladungsgekoppelte Vorrichtung während der Integrationsphase auf einer Temperatur hält, die geringer ist als die Temperatur des Milieus, in dem die Integration stattfindet.

**5.** Verfahren nach einem der vorangehenden Ansprüche, dadurch gekennzeichnet, daß man den Sensor mit einer Elektronik versieht, die das Löschen der ladungsgekoppelten Vorrichtung steuert, wobei die Elektronik den Übergang in die Integrationsphase durch Erkennung einer äußeren Steuerung oder einer von Hand ausgeführten Aktion gewährleistet.

**6.** Verfahren nach einem der vorangehenden Ansprüche, dadurch gekennzeichnet, daß die Steuerspannungen, die notwendig sind zum guten Arbeiten des Sensors im Integrationsmodus, wenn er von der Steuer und Verarbeitungselektronik abgeschaltet ist, von einem in den Sensor integrierten Akkumulator (2) ausgehend erzeugt werden, wobei der genannte Akkumulator automatisch wieder aufgeladen wird, wenn der genannte Sensor an die Steuer- und Verarbeitungselektronik angeschlossen ist.

**7.** Einrichtung zur Ausführung des Verfahrens nach einem der Ansprüche 1 bis 6. mit einem Sensor, der mit einer zur Rasterübertragung organisierten ladungsgekoppelten Vorrichtung und mit Mitteln zur Steuerung und zur Verarbeitung der in der ladungsgekoppelten Vorrichtung gespeicherten Bilddaten versehen ist, wobei der genannte Sensor von den genannten elektronischen Steuer- und Verarbeitungsmitteln abschaltbar ist, dadurch gekennzeichnet, daß der Sensor mit Mitteln versehen ist, die elektrische Schaltungen zur Versorgung mit elektrischer Energie und zur Versetzung der ladungsgekoppelten Vorrichtung in den Integrationszustand besitzt, die es erlauben, während des Integrationsmodus in von den Steuer- und Verarbeitungsmittel abgeschaltetem Zustand die Bilder zu erwerben und so eine Einheit zum selbstständigen Erwerb von Bildern im Integrationsmodus darstellt.

**8.** Einrichtung nach Anspruch 7, dadurch gekennzeichnet, daß sie Mittel (Rl bis R4) zum Halten der Steuerphasen $\phi_{p1}$ bis $\phi_{p4}$ der Bildzone der ladungsgekoppelten Vorrichtung (1) auf einem im wesentlichen konstanten Spannungsniveau bei dem Anschalten und dem Abschalten des Sensors besitzt.

**9.** Einrichtung nach Anspruch 8, dadurch gekennzeichnet, daß sie eine Spannungsquelle (2) besitzt, die mit einer Steuerphasenklemme $\phi_{p1}$ bis $\phi_{p4}$ der Bildzone der ladungsgekoppelten Vorrichtung (1) durch einen Widerstand (R1 bis R4) verbunden ist, der das genannte Mittel zum Halten auf einem im wesentlichen konstanten Niveau darstellt.

**10.** Einrichtung nach Anspruch 9, dadurch gekennzeichnet, daß die Spannungsquelle (2) ein Akkumulator ist, der in den Sensor integriert ist und automatisch wiederaufladbar ist, wenn der Sensor an die genannten Steuer und Verarbeitungsmittel angeschlossen ist.

**11.** Einrichtung nach einem der Ansprüche 7 bis 10, dadurch gekennzeichnet, daß der Sensor eine ladungsgekoppelte Vorrichtung (1) besitzt, die in der Lage ist, in dem genannten Multi Pinned Phase-Modus zu arbeiten.

**12.** Einrichtung nach einem der Ansprüche 7 bis 11, dadurch gekennzeichnet, daß sie Mittel zur Kühlung des Sensors bei einer Temperatur besitzt, die geringer ist als die Temperatur des Milieus, in dem die Integrationsphase stattfindet.

**13.** Einrichtung nach Anspruch 12, dadurch gekennzeichnet, daß die Mittel zur Kühlung des Sensors so geartet sind, daß sie die Kühlung bewirken, wenn der Sensor an die Steuer- und Verarbeitungsmittel angeschlossen ist.

**14.** Einrichtung nach Anspruch 12, dadurch gekennzeichnet, daß die Mittel zur Kühlung des Sensors an diesen angeschlossen sind.

**15.** Einrichtung nach einem der Ansprüche 7 bis 14, dadurch gekennzeichnet, daß die ladungsgekoppelte Vorrichtung in ein dichtes in einem Autoklaven keimfrei machbares Gehäuse eingebaut ist.

**16.** Einrichtung nach einem der Ansprüche 7 bis 15, dadurch gekennzeichnet, daß die ladungsgekoppelte Vorrichtung in ein Gehäuse eingebaut ist, das für das sichtbare Licht hermetisch ist und daß die Strahlung eine X-Strahlung ist.

**17.** Einrichtung nach einem der Ansprüche 7 bis 16, dadurch gekennzeichnet, daß die ladungsgekoppelte Vorrichtung für das sichtbare Licht hermetisch ist und daß sie einen Scintillator besitzt, der parallel zur fotoempfindlichen Fläche der ladungsgekoppelten Vorrichtung geschaltet ist, mit oder ohne optische Kopplung über Fasern oder Linsen, und daß die nutzbare Strahlung von dem genannten Scintillatorschirm erzeugt wird, wenn dieser von einer X-Strahlung erregt wird.

**Claims**

**1.** Method for producing images from an image information including radiation, according to which a sensor (1) comprising a charge coupled device organized for a field transfer and means for the control and the processing of the image data which are stored in the charge coupled device, characterized in that the sensor is provided with means comprising electric circuits (2,3) for the electric energy supply and for putting the charge coupled device in the integration state, enabling it to acquire images during the integration mode in a state switched off from the control and processing means, the sensor is switched off from the control and processing means for the acquiring of an image and the sensor is again connected to said control and processing means for the reading, the processing and using of the informations which are stored in the charge coupled device during the integration phase.

**2.** Method according to claim 1, characterized in that one uses as charge coupled device a charge coupled device provided for working in a so-called Multi Pinned Phase (MPP) mode and that the integration phase takes place during the MPP mode.

**3.** Method according to claim 1, characterized in that the charge coupled device is brought when it is connected to the said control and processing electronic means to a temperature less than the temperature of the medium in which the integration phase takes place.

**4.** Method according to claim 1, characterized in that the charge transfer device is connected to a cooling device which maintains the charge coupled device at a temperature less than the temperature of the medium in which the integration takes place, during the integration phase.

**5.** Method according to any of the foregoing claims, characterized in that one provides the sensor with an electronic means controlling the blanking of the charge coupled device, said electronics insuring the passage into the integration mode by detection of an external order or a manual action.

**6.** Method according to any of the foregoing claims, characterized in that the control voltages necessary for the good working of the sensor during the integration mode when it is disconnected from said control and processing electronics are produced from an accumulator integrated into said sensor, said accumulator being automatically recharged when said sensor is connected to said control and processing electronics.

7. Arrangement for putting into practice the method according to any of the claims 1 to 6, of the type comprising a sensor provided with a charge transfer device organized for a field transfer and means for controlling and processing image data stored in the charge coupled device, said sensor being disconnectable from said control and processing electronic means, characterized in that the sensor is provided with means comprising electric circuits for the supply with electric power and for putting the charge coupled device in the integration state, enabling it to acquire the images during the integration mode in a state disconnected from the control and processing means and constitutes thus a self containing image acquiring unit in the integration mode.

8. Arrangement according to claim 7, characterized in that it comprises means (R1 to R4) for maintaining the control phases $\phi_{P1}$ to $\phi_{p4}$ of the image zone of the charge coupled device (1) at a tension level substantially constant at the connection and disconnection of the sensor.

9. Arrangement according to claim 8, characterized in that it comprises a voltage source (2) coupled to each phase control terminal $\phi_{p1}$ to $\phi_{p4}$ of the image zone of the charge coupled device (1) by means of a resistor (R1 to R4) constituting the said means for the maintaining at a substantially constant level.

10. Arrangement according to claim 9, characterized in that the voltage source (2) is an accumulator integrated into the sensor and rechargeable automatically when the sensor is connected to the said control and processing means.

11. Arrangement according to any of claims 7 to 10, characterized in that the sensor comprises a charge coupled device (1) capable to work in the so-called Multi Pinned Phase mode.

12. Arrangement according to any of claims 7 to 11, characterized in that it comprises means for cooling the sensor at a temperature less than the temperature of the medium in which the integration phase takes place.

13. Arrangement according to claim 12, characterized in that the sensor cooling means are adapted to insure the cooling when the sensor is connected to the control and processing means.

14. Arrangement according to claim 12, characterized in that the sensor cooling means are coupled there-

to.

15. Arrangement according to any of claims 7 to 14, characterized in that the charge coupled device sensor is mounted in a tight box which can be sterilized in an autoclave.

16. Arrangement according to any of claims 7 to 15, characterized in that the charge coupled device sensor is mounted in a box hermetic for the visible light and that the radiation is an X radiation.

17. Arrangement according to any of claims 7 to 16, characterized in that the charge coupled device sensor is hermetic for the visible light and that it comprises a scintillator mounted in parallel relationship to the photosensitive surface of said charge coupled device, with or without optical coupling by fibers and by lenses, and in that the useful radiation is produced by said scintillator screen when it is activated by an X radiation.

**FIG.1**